# EUROPEAN PATENT APPLICATION

(11) **EP 2 278 729 A1**
(43) Date of publication of application: **26.01.2011**
(21) Application number: 09305623.2
(22) Date of filing: 30.06.2009
(51) Int. Cl.: H04B 7/02, H04L 1/06, H04B 7/06

(54) **Method for diversity transmission, transmitter, and receiver thereof**

(71) Applicant: Alcatel Lucent, 75008 Paris (FR)
(72) Inventor: Tangemann, Michael, 71229, Leonberg (DE)
(74) Representative: Brose, Gerhard

(57) **Abstract**

The invention relates to a method for data transmission in a radio communication system. The method comprising the steps of time spreading (M1/1) at least one symbol over a first sequence of symbol comprising at least two symbol times at a transmitter (TRA), and transmitting (M1/2) the time spread at least one symbol from the transmitter (TPA) to a receiver (REC), wherein the method further comprises the steps of re-fransmitting (M1/5) from the transmitter (TRA) to the receiver (REC) the of least one symbol being time spread over at least one second sequence of symbols comprising at least two further symbol times, and combining (M1/8) first received signals of the first sequence of symbols and at least second received signals of the at least one second sequence of symbols at the receiver (REC).

## Description

### FIELD OF THE INVENTION

The invention relates to a method for diversity transmission according to the preamble of claim 1, to a transmitter according to the preamble of claim 14, and to a receiver according to the preamble of claim 15.

### BACKGROUND OF THE INVENTION

SIMO (SIMO = single-input multiple-output), MISO (MISO = multiple-input single-output), and MIMO (MIMO = multiple-input multipe-oulput) radio transmission channels are applied in an RCS (RCS = radio communication system) by using multiple antenna elements at a transmit antenna system of a transmitter and/or at a receive antenna system of a receiver mainly to increase an overall data rate and/or maximum distance between the transmitter and the receiver.

Different techniques can be used for a data transmision from a network node comprising the transmitter and the transmit antenna system with the antenna elements. In the following, description the term MIMO will be used in the following as a synonym for MIMO and/or MISO.

For beamforming, the antenna elements of the transmit antenna system of a sector of a radio cell are used for example to form a beam by adjusting phases and amplitudes of a transmit signal at each of the antenna elements of the transmit antenna system and by taking advantage of constructive and destructive interference in a wave field. Beamforming can provide a high signal gain in comparison to an omnidirectional transmission and works well in quasi-open environments. But it requires knowledge of an antenna structure of the transmit antenna system and doesn't work well in high-scattering scenarios. Because beamforming is a closed-loop diversity method, it further requires a phase adjustment for a proper antenna calibration for example via measured uplink signals or via feedback information from the receiver. Beamforming is limited to co-located antenna arrangements. When a receive antenna system comprises for example several receivers of several mobile stations, beamforming cannot simultaneously maximize signal levels at all of the antenna elements of the several receivers. In such a case, usually precoding will be used in order to maximize the overall throughput performance for several data streams. In contrast to beamforming, where a distance between the antenna elements of the transmit antenna system is about half a wavelength of a transmit signal, in conventional MIMO transmission, a distance between the antenna elements of the transmit antenna system is typically between 4 and 20 times the wavelength of the transmit signal or the antenna elements are intersected providing a cross-polarized arrangement. In both cases, the antenna elements are primarily co-located. Examples of such MIMO transmission methods are the precoding as described above or diversity coding.

In CO-MIMO (CO-MIMO = Cooperative MIMO), also known as Network MIMO, or Ad-hoc MIMO, the antenna elements of the transmit and/or receive antenna system are distributed across different nodes such as base stations or mobile stations for multi-user MIMO.

In the diversity coding, a single signal is transmitted from each of the antenna elements of the transmit antenna system using certain principles of full or near orthogonal coding. The antenna structure or antenna arrangement of the transmit antenna system doesn't need to be known and a calibration or channel knowledge at the transmitter - as required for beamforming - is not needed. In contrast to beamforming, MIMO performs well in environments with high scattering such as indoor environments, street canyons, or environments below a rooftop, But the signal gain is limited for open environments such as suburban or rural areas. In spatial multiplexing, a high rate signal stream is split into multiple lower rate signal streams and each stream is transmitted from a different antenna element of the transmit antenna system in a same frequency channel to increase a channel capacity. Spatial multiplexing can be used with or without channel knowledge.

In WO 2004/002011 Al a number of diversity transmission modes are disclosed. The diversity transmission modes include a frequency diversity transmission mode, a Walsh diversity transmission mode, a space time transmit diversity (STTD) transmission mode, and a Walsh-STTD transmission mode.

The way of transmitting data in a diversity transmission mode affects its usability, its reliability, and its diversity gain.

Therefore, it is an object of the invention to provide a diversity transmission mode, which can be used flexible in a wide range of applications with a high reliability and a high diversity gain.

### SUMMARY OF THE INVENTION

The object is achieved by a method for data transmission in a radio communication system, wherein the method comprises the steps of time spreading at least one symbol over a first sequence of symbols comprising at least two symbol times at a transmitter, and transmitting the time spread at least one symbol from the transmitter to a receiver, and wherein the method further comprises the steps of re-transmitting from the transmitter to the receiver the at least one symbol being time spread over at least one second sequence of symbols comprising at least two further symbol times, and combining first received signers of the first sequence of symbols and at least second received signals of the at least one second sequence of symbols at the receiver.

The transmitter may be an integral part of a base station or a mobile station. The receiver may be an integral part of a further base station or a further mobile station.

The method provides a first benefit of being usable and flexible for any kind of antenna structure such as a distributed group of several single omni antenna elements, sector antennas, array antennas, cross-polarized antennas etc.

Furthermore, the method provides a second benefit of being usable and flexible for any location of the antenna elements such as co-located antenna elements, antenna elements distributed across a sector of a radio cell or across several sectors of a radio cell, antenna elements distributed across several base stations of a radio communication system etc.

No calibration is required for the antenna elements at the transmitter.

In one of the embodiments of the invention, a number of the at least two symbol times and of the at least two further symbol times is equal to a number of the at least two antenna elements of the transmitter. For a number of symbol times and for a number of symbols to be transmitted, it is possible to increase the time spreading by increasing the number of antenna elements at the transmitter. If for example four symbols shall be transmitted over two antenna elements, at least eight symbol times are required for the method according to the embodiments of the invention. If the four symbols are transmitted over four instead of the two antenna elements, also the at least eight symbol times are required but with a larger time spreading factor for each symbol. Thereby, the reliability of the transmission can be further increased.

A temporal diversity by using the time spreading provides the advantage of mitigating fast fading processes in a wireless channel between the transmitter and the receiver.

In a further one of the embodiments of the invention, the number of the at least two antenna elements may be a number of the powers of 2, such as 2, 4, 8, 16 etc. In comparison to the Alamouti scheme, which is used for space-time block coding and which is restricted to two antenna elements at the transmitter, the possibility to use the method according to the embodiments of the invention for more than two antenna elements is a further advantage.

In even further two embodiments of the invention, either the transmitting is performed over a first one of at least two antenna elements and the re-transmitting is performed over a second one of the at least two antenna elements or the transmitting for a first one of the of least two symbol times and the re-transmitting for at least one further first one of the at least two further symbol times are performed over a first one of at least two antenna elements and the transmitting for at least one second one of the at least two symbol times and the re-transmitting for at least one further second one of the at least two further symbol times are performed over a second one of the at least two antenna elements.

Both embodiments offers an advantage by transmitting the at least one symbol only over one antenna element at any time and thereby avoiding interference patterns in the wave field such a grating lobes.

By re-transmitting the at least one symbol over the second one of the at least two antenna elements an even further advantage is a spatial diversity gain, because the wireless channel between the transmitter and the receiver severely suffers from fading phenomena, which causes unreliability in data decoding. By sending multiple copies of the at least one symbol successively over different antenna elements, it is possible to improve the reliability of a data reception at the receiver by using different transmission paths of a wireless channel. If one of the copies fails to receive, the others can be used for a data recovery at the receiver.

In a further embodiment of the invention, the at least one symbol is re-transmitted successively over all of the at least two antenna elements. The further embodiment of the invention offers a further benefit, if more than two antenna elements are used at the transmitter. The diversity gain can be further increased by using not only two antenna elements successively for the at least one symbol but also the other antenna elements in a successive way at the transmitter.

In an even further embodiment of the invention, the time spreading of the at least one symbol is done with a first one of at least two orthogonal codes, This provides the possibilty of extending the time spreading, transmission, re-transmission, and combining to at least one further symbol in a simple manner.

In a first one of two further preferred embodiments of the invention, the at least two orthogonal codes are based on Walsh functions.

In a second one of the two even further preferred embodiments of the invention, the at least two orthogonal codes are based on orthogonal variable spreading factor codes.

The first one and the second one of the two further preferred embodiments of the invention provide a further increased flexibility of the method according to the embodiments of the invention by being able to select one of at least two orthogonal coding schemes.

In a further preferred embodiment of the invention, the time spreading over the first sequence of symbols is done for at least one further symbol with at least a further first one of the at least two orthogonal codes, the transmitting is done for the at least one further symbol, and the re-transmitting is done for the at least one further symbol.

The further preferred embodiment of the invention provides the advantage of transmitting the at least one further sym bol together with the at least one symbol at a same time to the receiver and thereby increasing a data rate. By using different orthogonal codes for the at least one symbol and the at least one further symbol at the transmitter, the receiver can detect the at least one symbol and the at least one further symbol without mutual interference by performing a signal reconstruction of the first received signals and/or of the at least second received signals.

By obtaining the first and the at least second received signal, the receiver gets at least two representations for the at least one symbol and at least two further representations for the at least one further symbol. This provides the advantage to combine the at least two representations to provide the at least one symbol and to combine the at least two further representations to provide the at least one further symbol. Such combinations provide an SINR gain corresponding to the number of antenna elements used for transmission of the at least one symbol and the at least one further symbol.

By repeating at least one second time the time spreading and the transmitting of the at least one symbol and the at least one further symbol over different antenna elements, an influence of short term fading processes on a reception quality of the at least two symbols can be reduced. If fading processes for different propagation paths between the transmitter and the receiver are independent, additionally a diversity gain may be achieved.

Since received signals can be detected and recovered independently at the receiver, the, method requires no calibration and no feedback loop.

In an even further preferred embodiment of the invention, the time spread at least one symbol and the time spread at least one further symbol are transmitted and re-transmitted over different of the at least two antenna elements.

The method offers a further advantage of avoiding interference patterns in the wave field such a grating lobes due to a random superposition of the at least one symbol and the at least one further symbol being transmitted over different antenna elements.

In a first one of two even further preferred embodiments of the invention, the first one of the at least two orthogonal codes is allocated to the first one of the at least two antenna elements and the at least further first one of the at least two orthogonal codes is allocated to the at least further first one of the at least two antenna elements for the first and the at least one second sequence of symbols.

In a second one of the two even further preferred embodiments of the invention, the first one of the at least two orthogonal codes is allocated to the at least one symbol and the at least further first one of the at least two orthogonal codes is allocated to the at least one further symbol for the first and the at least one second sequence of symbols.

The first one and the second one of the two even further preferred embodiments of the invention provide a higher flexibility either by using a same orthogonal code at a same antenna cement in both the first and the at least one second sequence of symbols or by using the same orthogonal code for a same symbol in both the first and the at least one second sequence of symbols.

The second one of the two even further preferred embodiments of the invention offer a further benefit of requiring less sequences of symbols for being able to reconstruct the at least one symbol and the at least one further symbol at the receiver.

In another embodiment of the invention, the method further comprises the steps of storing the first received signals at the receiver, calculating at least one first correction factor for the first received signals at the receiver, storing the at least second received signals at the receiver, and calculating at least one second correction factor for the at least second received signals at the receiver, and wherein the combining is a weighted summation of the first received signals and the at least second received signals using the at least one first and the at least one second correction factor. The at least one first and the at least one second correction factor may be phase correction factors and/or amplitude correction factors.

The weighted summation offers a further advantage by being able to weight the first received signals and the at least second received signals may be depended on signal-to-interference-and-noise ratios of the first and the at least second received signals. If for example a reception quality of one of the received signals is too bad and if a correction factor of the one of the received signals is multiplied with the one of the received signals in the weighted summation, the one of the received signals may be switched off by setting the correction factor of the one of the received signals to zero. The object of the invention is further achieved by an independent claim 14 for the transmitter and by an independent claim 15 for the receiver. Further advantageous features of the invention are defined in the following detailed description of the invention.

### BRIEF DESCRIPTION OF THE DRAWINGS

The embodiments of the invention will become apparent in the following detailed description and will be illustrated by accompanying drawings given by way of non-limiting illustrations.
Figure 1 shows a coding scheme according to the prior art.
Figure 2 shows a further coding scheme according to the prior art.
Figure 3 shows an even further coding scheme according to the prior art.
Figure 4 shows a flow diagram of a method in accordance to a first embodiment of the invention.
Figure 5 shows two time spreading schemes according to the first embodiment of the invention.
Figure 6 shows further two time spreading schemes according to the first embodiment of the invention.
Figure 7 shows a flow diagram of a method in accordance to a second embodiment of the invention.
Figure 8 shows two time spreading and coding schemes according to the second embodiment of the invention.
Figure 9 shows further two time spreading and cording schemes according to the second embodiment of the invention.
Figure 10 shows a flow diagram of a method in accordance to a third embodiment of the invention.
Figure 11 shows a block diagram of a transmitter and a receiver of a radio communication system according to the embodiments of the invention.
Figure 12 shows a block diagram of a radio communication system according to a first application of the embodiments of the invention.
Figure 13 shows a block diagram of a further radio communication system according to a second application of the embodiments of the invention.
Figure 14 shows a block diagram of an even further radio communication system according to a third application of the embodiments of the invention.

### DETAILED DESCRIPTION OF THE INVENTION

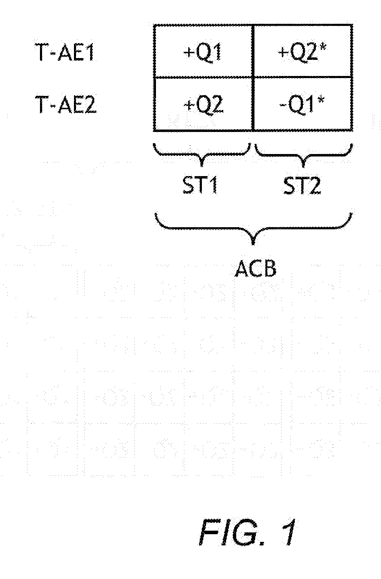

Figure 1 shows an Alamouti coding scheme according to the prior art (see WO 2004/002011 A1), which is usually used for space-time block coding in a space-time transmit diversity scheme. Two modulation symbols Q1, Q2 are transmitted from two antenna elements T-AE1, T-AE2. Thereto, a first vector v1 [+Q1 +Q2*] and a second vector v2 = [+Q2 -Q1*] are generated by Alamouti coding for a block ACB. Both vectors v1, v2 include two elements, that are to be transmitted sequentially in two symbol times ST1, ST2 from one of the two antenna elements T-AE1, T-AE2. Such a coding scheme is limited to two antenna elements at a transmitter,

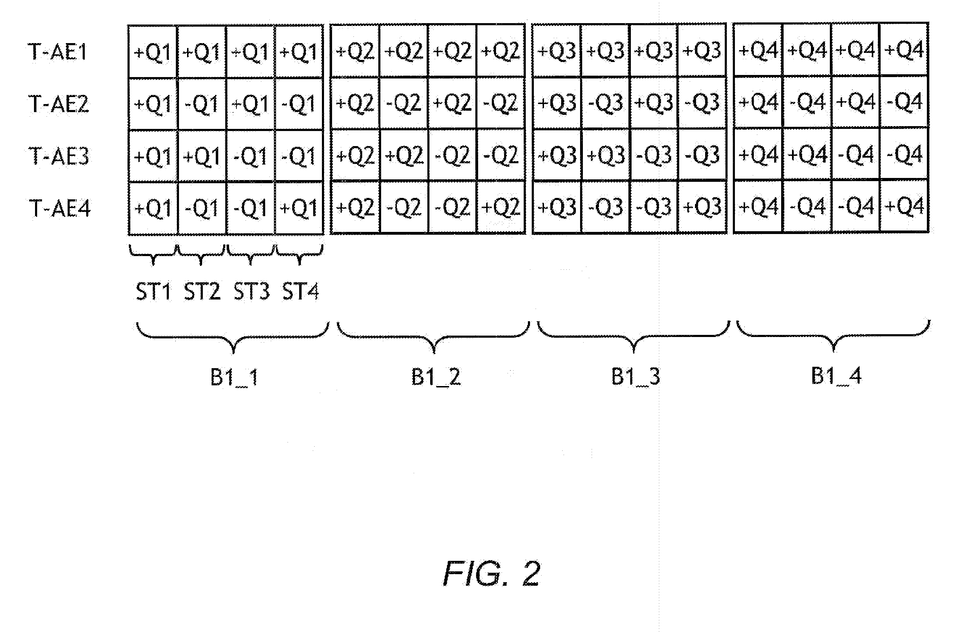

Figure 2 shows a further coding scheme based on a Walsh transmit diversity (see WO 2004/002011 A1). Four modulation symbols Q1, Q2, Q3, Q4 are transmitted sequentially in four blocks B1_1, B1_2, B1_3, B1_4 over four antenna elements T-AE1, T-AE2, T-AE3, T-AE4. For establishing a full transmit diversity across the antenna elements T-AE1, T-AE2, T-AE3, T-AE4, each of the modulation symbols Q1, Q2, Q3, Q4 is transmitted in parallel at a same time across the antenna elements T-AE1, T-AE2, T-AE3, T-AE4 by time spreading each of the modulation symbols Q1, Q2, Q3, Q4 across four symbol times ST1, ST2, ST3, ST4 with different orthogonal functions, The different orthogonal functions shown in Figure 2 are Walsh functions, which are given by entries of a row of a so-called Hadamard matrix or Walsh matrix. The entries of the Hadamard matrix are either -1 or -1 and rows of the Hadamard matrix are mutually orthogonal. The coding scheme according to Figure 2 generates interference patterns in the wave field such as grating lobes.

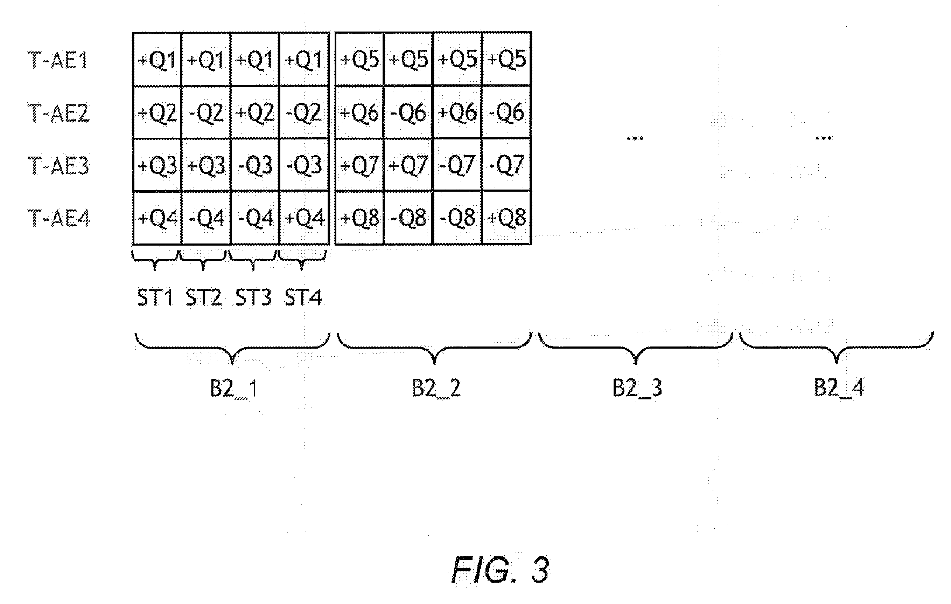

Figure 3 shows an even further coding scheme based on the Walsh transmit diversity (see WO 2004/002011 A1). In a first block B2_1, four modulation symbols Q1, Q2, Q3, Q4 are transmitted across four antenna elements T-AE1, T-AE2, T-AE3, T-AE4, wherein different symbols are coded and time spread across four symbol times ST1, ST2, ST3, ST4 with different Walsh functions and wherein the different symbols are transmitter across different antenna elements. In a second block B2_2 further four modulation symbols Q5, Q6, Q7, Q8 and in further blocks B2_3, B2_4 even further modulation symbols are transmitted across the four antenna elements T-AE1, T-AE2, T-AE3, T-AE4 in a same way. In comparison to the cording scheme shown in Figure 2, the even further coding scheme according to Figure 3 provides a higher data rate but without providing a diversity gain,

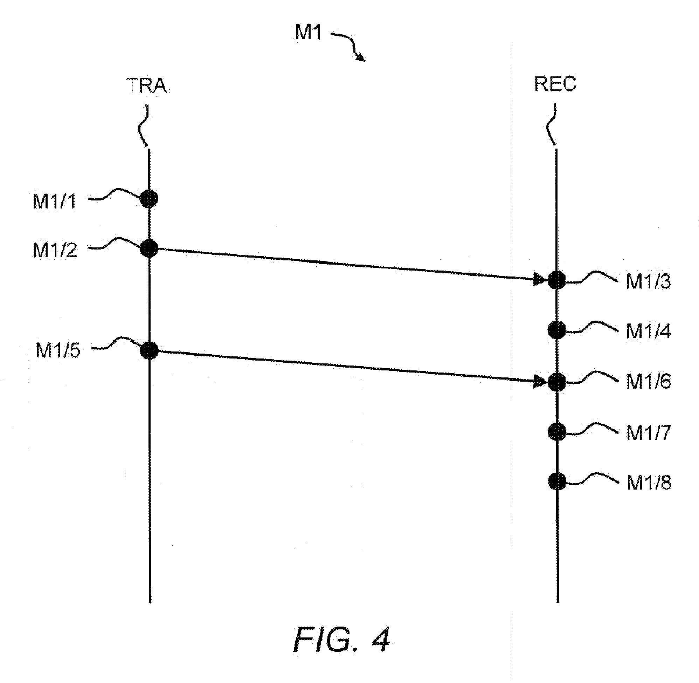

Figure 4 shows a flow diagram of a method M1 for a radio communication between a transmitter TRA and a receiver REC in accordance to a first embodiment of the invention. The sequence and the number of the steps for performing the method M1 is not critical, and as can be understood by those skilled in the art, that the sequence and the number of the steps may vary without departing from the scope of the invention.

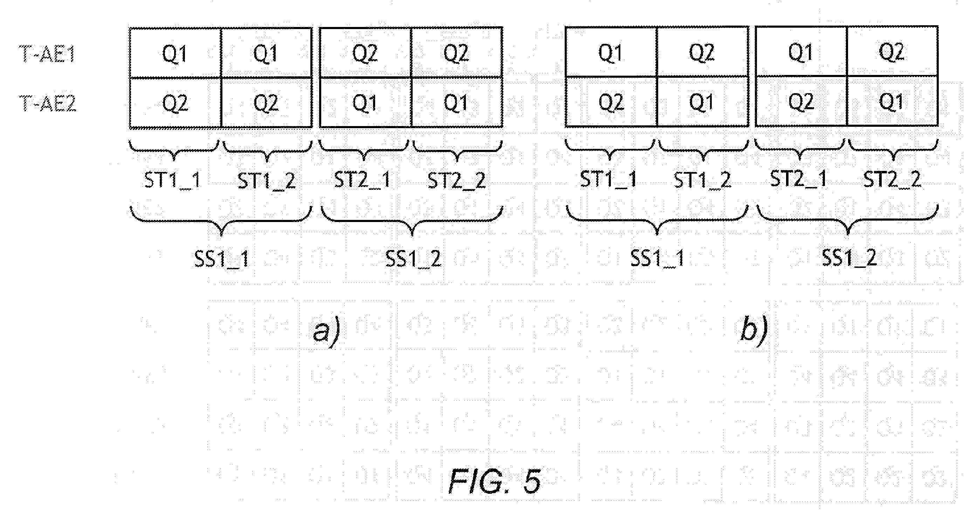

In a first step M1/1, the transmitter TRA of a first network node time spreads a first symbol Q1 over two symbol times ST1_1, ST1_2 of a first sequence of symbols SS1_1 (see Figure 5 a and 5 b).

In an alternative, the transmitter TRA of the first network node time may spread in addition to the first symbol Q1, a second symbol Q2 over the two symbol times ST1_1, ST1_2 of the first sequence of symbols SS1_1 (see Figure 5 a and 5 b).

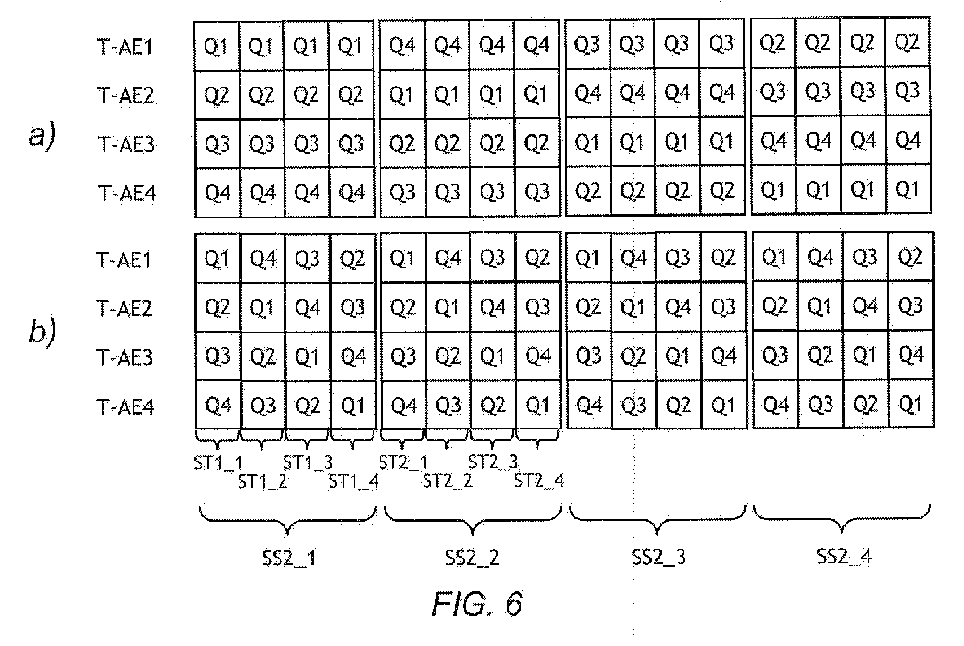

In a further alternative, the transmitter TRA may spread the first symbol Q1, the second symbol Q2, a third symbol Q3, and a fourth symbol Q4 over four symbol times ST1_1, ST1_2, ST1_3, ST1_4 of the first sequence of symbols SS2_1 (see Figure 6 a and 6 b).

In even further alternatives, the transmitter TRA may spread more than four symbols over more than four symbol times of the first sequence of symbols. Instead of the transmitter TRA a transceiver may be used for performing the method M1.

The first network node may be for example a base station of a radio access network such as an eNodeB in LTE 3GPP (LTE 3GPP = Long Term Evolution Third Partnership Project), a base station inWiMAX IEEE 80216m (WiMAX = Worldwide Interoperability for Microwave Access, IEEE = Institute of Electrical and Electronics Engineers) or an access point in WLAN IEEE 802.1 In (WLAN = wireless local area network).

In a further alternative, the first network node may be a mobile station such as a PDA (PDA = personal digital assistant), a smartphone, a laptop (also known as a notebook), or an automotive navigation system. The symbols Q1, Q2, Q3, Q4 may be for example OFDM symbols (OFDM = Orthogonal frequency-division multiplexing) or W-CDMA symbol (W-CDMA = Wideband Code Division Multiple Access).

The time spreading for the first symbol Q1 can be done for example by simply duplicating the first symbol Q1 or by duplicating the first symbol Q1 and reversing a sigh of the first symbol Q1 four the second symbol time ST2 or more symbol times.

The number of symbol times ST1_1, ST1_2, ST1_3, ST1_4 of the first sequence of symbols SS1_1, SS2_1 may be preferably equal to a number of antenna elements of a transmit antenna system. In an alternative, the number of symbol times ST1_1, ST1_2, ST1_3, ST1_4 of the first sequence of symbols SS1_1, SS2_1 may be larger than the number of antenna elements of the transmit antenna system.

The number of antenna elements of the transmit antenna system may be preferably one of the powers of 2. In an alternative, the number of antenna elements of the transmit antenna system may be for example an odd number such as 3, 5, 7 etc. In such case, one or some of the antenna elements of the transmit antenna system will be not used for the method M1.

The transmit antenna system may own any kind of antenna structure such as a distributed group of several single omni antenna elements, sector antennas, array antennas, cross-polarized antennas, a distributed group of sector, array, or cross-polarized antennas etc.

In a further step M1/2, the time spread first symbol Q1 is transmitted with a first frame structure such as shown in Figure 5 a) from the transmitter TRA over a first antenna element T-AE1 of two antenna elements T-AE1, T-AE2 of the transmit antenna system to the receiver REC of a second network node.

In an alternative, the time spread first symbol Q1 is transmitted with a second frame structure such as shown in Figure 5 b) in a first symbol time ST1_1 of the first sequence of symbols SS1_1 over a first antenna element T-AE1 of the two antenna elements T-AE1, T-AE2 of the transmit antenna system and in a second symbol time ST1_2 of the first sequence of symbols SS1_1 over a second antenna element T-AE2 of the two antenna elements T-AE1, T-AE2 of the transmit antenna system.

In a further alternative, the time spread first symbol Q1 and the time spread second symbol Q2 may be transmitted over different antenna elements of the two antenna elements T-AE1, T-AE2 using one of the preceding symbol to symbol time to antenna element allocations as described for the first symbol Q1 (see Figure 5 a and 5 b).

In an even further alternative, the time spreaded first symbol Q1 may be with a third frame structure such as shown in Figure 6 a) transmitted from the transmitter TRA over the first antenna element T-AE1 of four antenna elements T-AE1, T-AE2, T-AE3, T-AE4, the time spreaded second symbol Q2 may be transmitted over the second antenna element T-AE2 of the four antenna elements T-AE1, T-AE2, T-AE3, T-AE4, the time spreaded third symbol Q3 may be transmitted over a third antenna element T-AE3 of the four antenna elements T-AE1, T-AE2, T-AE3, T-AE4, and the time spreaded fourth symbol Q4 may be transmitted over a fourth antenna element T-AE4 of the four antenna elements T-AE1, T-AE2, T-AE3, T-AE4 for the first sequence of symbols ST1_1, ST1_2, ST1_3, AR1_4. in yet another alternative, the time spread first symbol Q1 may be transmitted with a fourth frame structure such as shown in Figure 6 b) in the first symbol time ST1_1 over the first antenna element T-AE1, in the second symbol time ST1_2 over the second antenna element T-AE2, in a third symbol time ST1_3 over a third antenna element T-AE3, and in a fourth symbol time ST1_4 over a fourth antenna element T-AE4 of the four antenna elements T-AE1, T-AE2, T-AE3, T-AE4. The same may be done for the time spread second symbol Q2, The time spread third symbol Q3, and the time spread fourth symbol Q4, but in different sequences and thereby using different antenna elements.

In further alternatives, more than four time spread symbols may be transmitted over more than four antenna elements from the transmitter TRA to the receiver RFC. This means, that time spread symbols may be transmitted over different antenna elements for a whole sequence of symbols or only for one symbol time, This provides the advantage of increasing a data rate of the radio communication between the transmitter TRA and the receiver REC.

Instead of the receiver REC a transceiver may be used at the second network node for performing the method M1.

The second network node may be a further base station of a radio access network such as an eNodeB in LTE 3GPP (LTE 3GPP = Long Term Evolution Third Partnership Project) or an access point in WLAN IEEE 802.11n (WLAN = wireless local area network, IEEE = Institute of Electrical and Electronics Engineers).

In a further alternative, the second network node may be a further mobile station such as a PDA (PDA = personal digital assistant), a smartphone, a laptop (also known as a notebook), or an automotive navigation system. The method M1 may be used for example for downlink and/or uplink radio communication between the base station and the mobile station, for relaying of a radio communication between the base station and the further base station or between the mobile station and the further mobile station, for signalling between the base station and the further base station, or for a direct radio communication between the mobile station and the further mobile station.

In a next step M1/3, the first symbol Q1, which is time spread over the first sequence of symbols SS1_1, is received in the form of first received signals at the receiver REC.

In an alternative, the first symbol Q1 and the second symbol Q2, which are time spread over the first sequence of symbols may be received in the form of the first received signals at the receiver REC.

In a further alternative, the first symbol Q1, second symbol Q2, the third symbol Q3, and the fourth symbol Q4, which are time spread over the first sequence of symbols SS2_1, may be received in the form of the first received signals at the receiver REC. In even further alternatives, more than four symbols, which are time spread over the first sequence of symbols, may be received in the form of the first received signals at the receiver REC.

In a further step M1/4, the first received signals may be stored at the receiver REC for a later combining.

In a next step M1/5, the first symbol Q1 is re-transmitted with the first frame structure shown in Figure 5 a) from the transmitter TRA to the receiver REC of the second network node over the second antenna element T-AE2 of the two antenna elements T-AE1, T-AE2 of the transmit antenna system with a second sequence of symbols SS1_2 comprising two further symbol times ST2_1, ST2_2. This means, that the second sequence of symbols SS1_2 is transmitted temporally after the first sequence of symbols SS1_1.

In an alternative, the first symbol Q1 may be re-transmitted with the second frame structure shown in Figure 5 b) in a first symbol time ST2_1 of the second sequence of symbols SS1_2 over the first antenna element T-AE1 and in a second symbol time ST2_2 of the second sequence of symbols SS1_2 over the second antenna element T-AE2.

In a further alternative, the first symbol Q1 may be re-transmitted over the second antenna element T-AE2 of the two antenna elements T-AE1, T-AE2 and the second symbol Q2 may be re-transmitted with the second sequence of symbols SS1_2 over the first antenna element T-AE1 of the two antenna elements T-AE1, T-AE2 (see Figure 5 a).

In an even further alternative, the first symbol Q1 may be re-transmitted with the third frame structure shown in Figure 6 a) with the second sequence of symbols SS2_2 over the second antenna element T-AE2 of the four antenna elements T-AE1, T-AE2, T-AE3, T-AE4, the second symbol Q2 may be re-transmitted with the second sequence of symbols SS2_2 over the third antenna element T-AE3 of the four antenna elements T-AE1, T-AE2, T-AE3, T-AE4 the third symbol Q3 may be re-transmitted with the second sequence of symbols SS2_2 over the fourth antenna element T-AE4 of the four antenna elements T-AE1, T-AE2, T-AE3, T-AE4, and the fourth symbol Q4 may be re-transmitted with the second sequence of symbols SS2_2 over the first antenna element T-AE1 of the four antenna elements T-AE1, T-AE2, T-AE3, T-AE4.

In yet another alternative, the first symbol Q1 may be re-transmitted with the fourth frame structure shown in Figure 6 b) in the first symbol time ST2_1 of the second sequence of symbols SS2_2 over the first antenna element T-AE1, in the second symbol time ST2_2 of the second sequence of symbols SS2_2 over the second antenna element T-AE2, and in a third symbol time ST2_3 of the second sequence of symbols SS2_2 over the third antenna element T-AE3, and in a fourth symbol time ST2_4 of the second sequence of symbols SS2_2 over the fourth antenna element T-AE4 of the four antenna elements T-AE1, T-AE2, T-AE3, T-AE4. The same is done for the time spread second symbol Q2, the time spread third symbol Q3, and the time spread fourth symbol Q4, but in different sequences over different antenna elements.

In further alternatives, more than four symbols are re-transmitted with the second sequence of symbols over more than four antenna elements of the transmit antenna system.

This means, that the time spread symbols of the second sequence of symbols SS1_2, SS2_2 may be re-transmitted over a different antenna element than the time spread symbols of the first sequence of symbols SS1_1, SS2_1, if no antenna spreading is applied for the symbols in the first sequence of symbols (see Figure 5 a and 6 a) or re-transmitted again over the same antenna elements, if antenna spreading is applied for the symbols in the first sequence of symbols (see Figure 5 b and 6 b). This provides the benefit of obtaining spatial and temporal diversity gain for the time spread symbols.

The first sequence of symbols SS1_1, SS2_1 and the second sequence of symbol SS1_2, SS2_2 may be for a example a transmission block, which may be terminated by an End Of Block character (EOB), End Transmission Block character (ETB), End Of Text character (ETX), or End Of Transmission character (EOT). In an alternative, beginning and end of the transmission block may be derived from a position in a data frame.

The first symbol Q1 may be preferably re-transmitted over all antenna elements of the transmit antenna system. In case of the transmit antenna system shown according to Figure 5 having the two antenna elements T-AE1, T-AE2, this feature is always fulfilled for the method M1. But for a transmit antenna system comprising more than two antenna elements such as shown according to Figure 6 for the four antenna elements T-AE1, T-AE2, T-AE3, T-AE4, this feature may be fulfilled or may be not fulfilled, depending on target performance requirements. This means, that in case of the four antenna elements T-AET, T-AE2, T-AE3, T-AE4, a re-transmission of the first symbol Q1 may be done once, twice, three times or even more frequent.

A selection of such options may be done by an OA&M network node (OA&M = Operations, Administration, and Management or Operations, Administration, and Maintenance).

In a further step M1/6, the first symbol Q1, which is time spread over the second sequence of symbols SS1_2 is received in the form of second received signers at the receiver REC.

In an alternative, the first symbol Q1 and the second symbol Q2, which are time spread over the second sequence of symbols SS1_2, may be received in the form of the second received signals at the receiver REC. In a further alternative, the first symbol Q1, the second symbol Q2, the third symbol Q3, and the fourth symbol Q4, which are time spread over the second sequence of symbols SS2_2 may be received in the form of the second received signals at the receiver REC.

In even further alternatives, more than four symbols, which are time spread over the second sequence of symbols, may be received in the form of the second received signals at the receiver REC.

In a next step M1/7, the second received signals may be stored at the receiver REC for a later combining.

The steps M1/5, M1/6, and M1/7 may be repeated for a repeat number being equal to the number of antenna elements of the transmit antenna system minus 1. In case of the four antenna elements T-AE1, T-AE2, T-AE3, T-AE4, the steps M1/5, M1/6, and M1/7 may be repeated for a third sequence of symbols SS2_3 with third received signals and for a fourth sequence of symbols SS2_4 with fourth received signals (see Figure 6 a and 6b).

In a further step M1/8, the receiver REC combines the first received signals and the second received signals for a data recovery of the first symbol Q1. For the combining step M1/8, the receiver REC is aware of a spreading scheme and a frame structure used at the transmitter. The receiver REC despreads the first and the at least second received signals,

In an alternative, the receiver REC may combine the first received signals and the second received signals for a data recovery of the first symbol Q1 and the second symbol Q2.

In a further alternative, the receiver REC may combine the first received signals, the second received signals, the third received signals, and the fourth received signals for a data recovery of the first symbol Q1, the second symbol Q2, the third symbol Q3, and the fourth symbol Q4.

In even further alternatives, the receiver REC may combine more than four received signal for a data recovery of more than four symbols. The receiver REC is able to recovery the first and the second symbol Q1, Q2 or the first, the second, the third, and the fourth symbol Q1, Q2, Q3, Q4 by knowing a channel impulse response or also referred to as a channel transfer function of a radio channel between the transmitter TRA and the receiver REC, even if the two symbols Q1, Q2, the four symbols Q1, Q2, Q3, Q4 or even more symbols are not orthogonal coded.

The combining may be a summation with or without weighting the first and the second received signals or the first, the second, the third, and the fourth received signals by using weighing factors.

In further alternatives, the receiver REC may only use the first received signals or only the second received signals for the data recovery of the first symbol Q1, if the storing steps M1/4 and/or M1/7 are not applied.

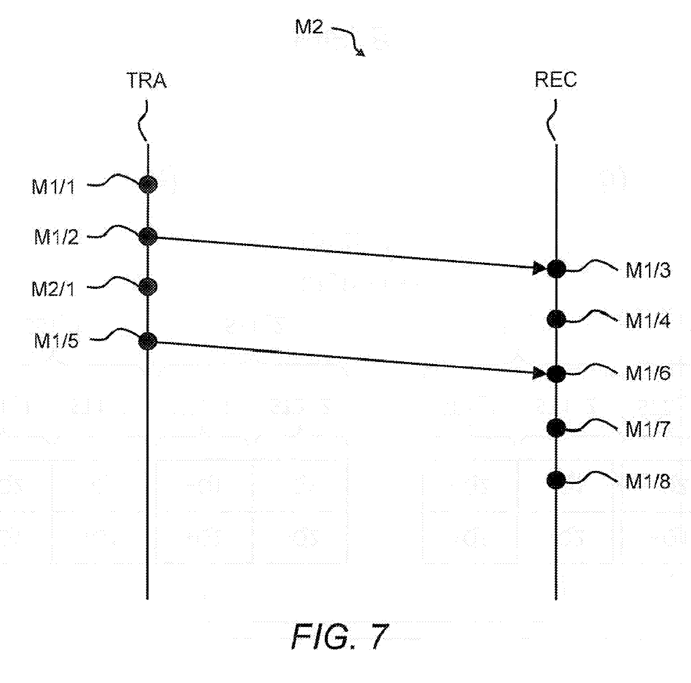

Figure 7 shows a flow diagram of a method M2 in accordance to a second embodiment of the invention. The sequence and the number of the steps for performing the method M2 is not critical, and as can be understood by those skilled in the art, that the sequence and the number of the steps may vary without departing from the scope of the invention.

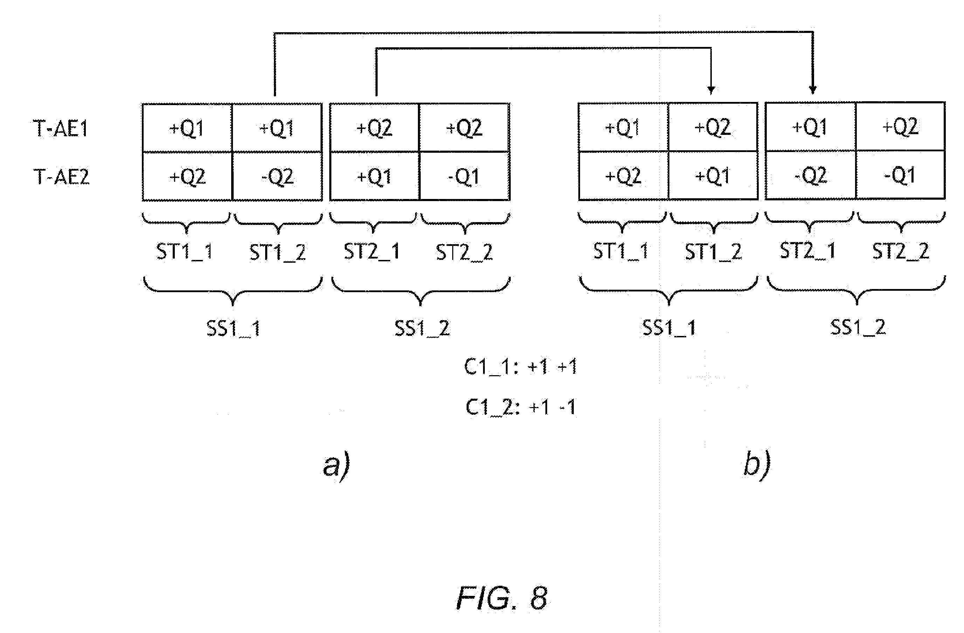

In the second embodiment of the invention, the steps M1/1 to M1/8 performed according to the first embodiment of the invention may be adapted and following step M2/1 may be performed in addition. In the step M1/1, the time spreading of the first symbol Q1 is done with a first orthogonal code C1_1 of two orthogonal codes C1_1, C1_2 and the time spreading of the second symbol Q2 is done with a second orthogonal code C1_2 of the two orthogonal codes C1_1, C1_2 (see Figure 8 a). In an alternative, the time spreading of the first symbol Q1 may be done with the first orthogonal code C1_1 of the two orthogonal codes C1_1, C1_2 and the time spreading of the second symbol Q2 may done with the second orthogonal code C1_2 of the two orthogonal codes C1_1, C1_2 by interleaving symbol times of the first and the second sequence of symbols (see Figure 8 b). This means, that the second symbol time ST1_2 of the first sequence of symbols comprises the symbol of the first symbol time ST2_1 of the second sequence of symbols of the first frame structure according to Figure 8 a) as indicated by arrows shown in Figure 8.

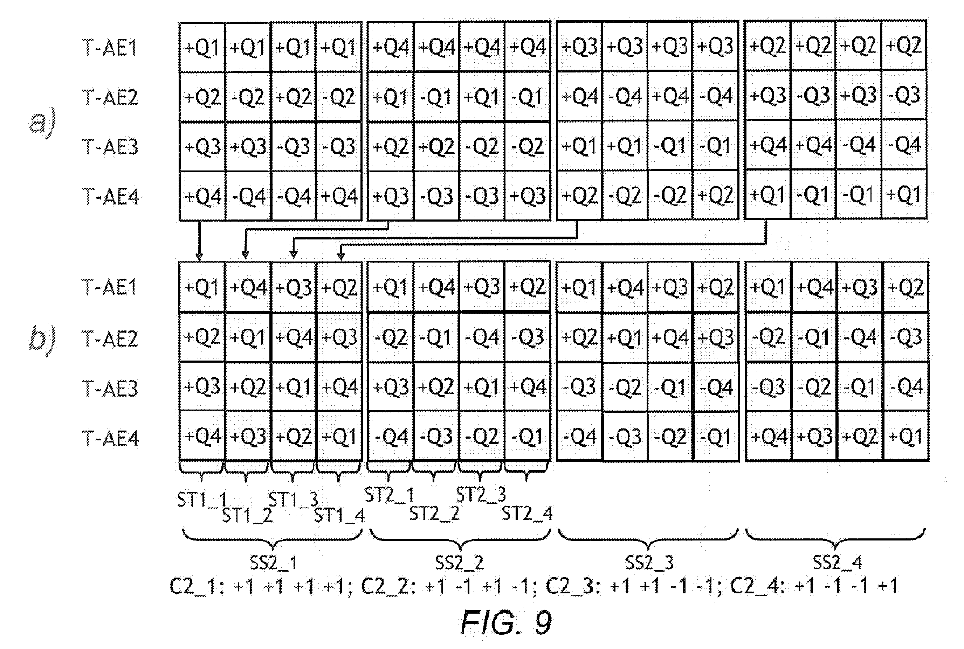

In an alternative, the time spreading of the first symbol Q1 may be done with a first orthogonal code C2_1 of four orthogonal codes C2_1, C2_2, C2_3, C2_4, the time spreading of the second symbol Q2 may be done with a second orthogonal code C2_2 of the four orthogonal codes C2_1, C2_2, C2_3, C2_4, the time spreading of the third symbol Q3 may be done with a third orthogonal code C2_3 of the four orthogonal codes C2_1, C2_2, C2_3, C2_4, and the time spreading of the fourth symbol Q4 may be done with a fourth orthogonal code C2_4 of the four orthogonal codes C2_1, C2_2, C2_3, C2_4 (see Figure 9 a).

In a further alternative, , the time spreading of the first symbol Q1 may be done with a first orthogonal code C2_1 of four orthogonal codes C2_1, C2_2, C2_3, C2_4, the time spreading of the second symbol Q2 may be done with a second orthogonal code C2_2 of the four orthogonal codes C2_1, C2_2, C2_3, C2_4, the time spreading of the third symbol Q3 may be done with a third orthogonal code C2_3 of the four orthogonal codes C2_1, C2_2, C2_3, C2_4, and the time spreading of the fourth symbol Q4 may be done with a fourth orthogonal code C2_4 of the four orthogonal codes C2_1, C2_2, C2_3, C2_4 by interleaving symbol times of the first, the second, the third and the fourth sequence of symbols SS2_1, SS2_2, SS2_3, SS2_4 (see Figure 9 b). This means, that the first symbol time ST1_1 of the first sequence of symbols SS2_1 comprises the symbols of the first symbol time ST1_1 of the first sequence of symbols of the first frame structure according to Figure 9 a), the second symbol time ST1_2 of the first sequence of symbols SS2_1 comprises the symbols of the first symbol time ST2_1 of the second sequence of symbols SS2_2 of the first frame structure according to Figure 9 a), the third symbol time ST1_3 of the first sequence of symbols SS2_1 comprises the symbols of a first symbol time of the third sequence of symbols SS2_3 of the first frame structure according to Figure 9 a), and the fourth symbol time ST1_4 of the first sequence of symbols SS2_1 comprises the symbols of a first symbol time of the fourth sequence of symbols SS2_4 of the first frame structure according to Figure 9 a), as indicated by arrows shown in Figure 9.

In even further alternatives, the time spreading of more than four symbols may be done with more than four orthogonal codes.

The two orthogonal codes C1_1, C1_2 or the four orthogonal codes C2_1, C2_2, C2_3, C2_4 may be based on Walsh functions.

In an alternative, the two orthogonal codes C1_1, C1_2 or the four orthogonal codes C2_1, C2_2, C2_3, C2_4 may be based on orthogonal variable spreading factor codes or on any other group of orthogonal functions.

In a further step M2/1, the first symbol Q1 is time spread over the second sequence of symbols SS1_2 with the second orthogonal code C1_2 of the two orthogonal codes C1_1, C1_2 and the second symbol Q2 is time spread over the second sequence of symbols SS1_2 with the first orthogonal code C1_1 of the two orthogonal codes C1_1, C1_2 at the transmitter (see Figure 8 a).

In an alternative, the first symbol Q1 is time spread over the second sequence of symbols SS1_2 with the second orthogonal code C1_2 of the two orthogonal codes C1_1), C1_2 and the second symbol Q2 is time spread over the second sequence of symbols SS1_2 with the first orthogonal code C1_1 of the two orthogonal codes C1_1, C1_2 at the transmitter by interleaving symbol times of the first and the second sequence of symbols (see Figure 8 b). This means, that the first symbol time ST2_1 of the second sequence of symbols comprises the symbols of the second symbol time ST1_2 of the first sequence of symbols of the first frame structure according to Figure 8 a) as indicated by the arrows shown in Figure 8.

In a further alternative, the first symbol Q1 is time spread over the second sequence of symbols SS2_2 with the second orthogonol code C2_2 of the four orthogonal codes C2_1, C2_2, C2_3, C2_4, the second symbol Q2 is time spread over the second sequence of symbols SS2_2 with the third orthogonal code C2_3 of the four orthogonal codes C2_1, C2_2, C2_3, C2_4, the third symbol Q3 is time spread over the second sequence of symbols SS2_2 with the fourth orthogonal code C2_4 of the four orthogonal codes C2_1, C2_2, C2_3, C2_4, and the fourth symbol Q4 is time spread over the second sequence of symbols SS2_2 with the first orthogonal code C2_1 of the four orthogonal codes C2_1, C2_2, C2_3, C2_4 at the transmitter (see Figure 9 a).

In an even further alternative, the first symbol Q1 is time spread over the second sequence of symbols SS2_2 with the second orthogonal code C2_2 of the four orthogonal codes C2_1, C2_2, C2_3, C2_4, the second symbol Q2 is time spread over the second sequence of symbols SS2_2 with the third orthogonal code C2_3 of the four orthogonal codes C2_1, C2_2, C2_3, C2_4, the third symbol Q3 is time spread over the second sequence of symbols SS2_2 with the fourth orthogonal code C2_4 of the four orthogonal codes C2_1, C2_2, C2_3, C2_4, and the fourth symbol Q4 is time spread over the second sequence of symbols SS2_2 with the first orthogonal code C2_1 of the four orthogonal codes C2_1, C2_2, C2_3, C2_4 at the transmitter by applying a similar interleaving for the second sequence of symbols SS2_2 as being applied for the first sequence of symbols SS2_1 as described above (see Figure 9 b). In even further alternatives, the time spreading of more than four symbols over the second sequence of symbols may be done with more than four orthogonal codes. This means, that each symbol being time spread over the second sequence of symbols is coded with a different orthogonal code than being used for the first sequence of symbols.

For the combining step M1/8, the receiver REC is aware of a coding scheme used at the transmitter.

The step M2/1 may be repeated for the repeat number being equal to the number of antenna elements of the transmit antenna system minus 1.

The first orthogonal code C1_1 of the two orthogonal codes C1_1, C1_2 may be allocated to the first antenna element T-AE1 of the two antenna elements T-AE1, T-AE2 and the second orthogonal code C1_2 of the two orthogonal codes C1_1, C1_2 may be allocated to the second antenna element T-AE2 of the two antenna elements T-AE1, T-AE2 for the first and the second sequence of symbols SS1_1, SS1_2, Similarly one of the four orthogonal codes C2_1, C2_2, C2_3, C2-4 may be allocated to one of the four antenna elements T-AE1, T-AE2, T-AE3, T-AE4 for the first, the second, the third, and the fourth sequence of symbols SS2_1, SS2_2, SS2_3, SS2_4. The same can be applied for more than four orthogonal codes and more than four antenna e!ements.

The first orthogonal code C1_1 of the two orthogonal codes C1_1, C1_2 may be allocated to the first symbol Q1 of the two symbols Q1, Q2 and the second orthogonal code C1_2 of the two orthogonal codes C1_1, C1_2 may be allocated to the second symbol Q2 of the two symbols Q1, Q2 for the first and the second sequence of symbols SS1_1, SS1_2. Similarly one of the four orthogonal codes C2_1, C2_2, C2_3, C2_4 may be allocated to one of the four symbols Q1, Q2, Q3, Q4 for the first and the second sequence of symbols SS2_1, SS2_2 or for the first, the second, the third, and the fourth sequence of symbols SS2_1, SS2_2, SS2_3, SS2_4.

The same can be applied, for more than four orthogonal codes and more than four symbols.

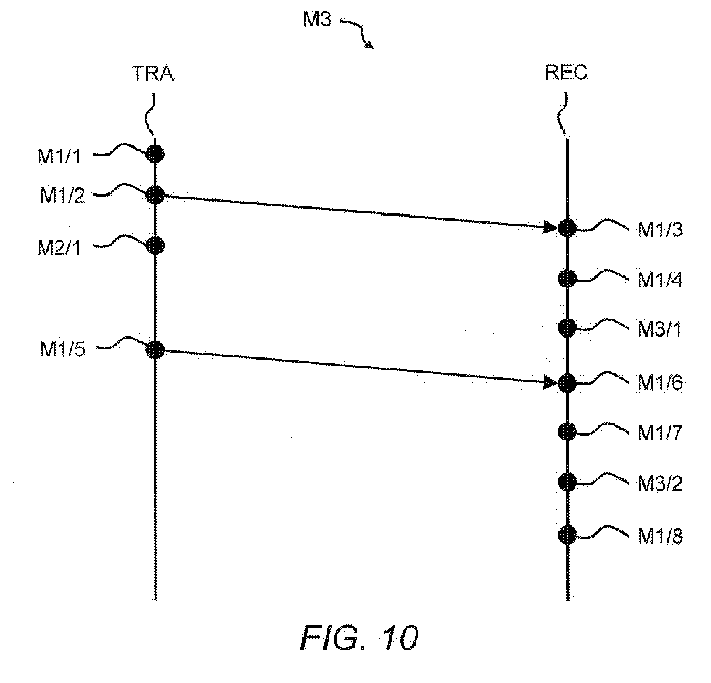

Figure 10 shows a flow diagram of a method M3 in accordance to a third embodiment of the invention. The sequence and the number of the steps for performing the method M3 is not critical, and as can be understood by those skilled in the art, that the sequence and the number of the steps may vary without departing from the scope of the invention. In addition to the steps M1/1 to M1/8 and M2/1 performed according to the second embodiment of the invention, in the third embodiment of the invention following steps M3/1 and M3/2 are performed in addition.

In the further step M3/1, the receiver REC may calculate at least one first correction factor for the first received signals.

In the further step M3/2, the receiver REC may calculate at least one second correction factor for the second received signals.

In an alternative, the further step M3/2 may be repeated for calculating the least one second correction factor for the second received signal at least one third correction factor for the third received signals, and at least one fourth correction factor for the fourth received signals.

In a further alternative, the further step M3/2 may be repeated to calculate more than at least four correction factors for more than four received signals.

The at least one first, the at least one second, the of least one third, and/or the at least one fourth correction factor may be for example phase correction factors or amplitude correction factors.

In the step M1/8, the receiver REC may use the correction factors for the weighting factors, if the receiver REC may perform the summation with weighting.

Depending on slow or fast fading, the calculating of the correction factors may be done on a granularity of a symbol time or on a granularity of a sequence of symbols.

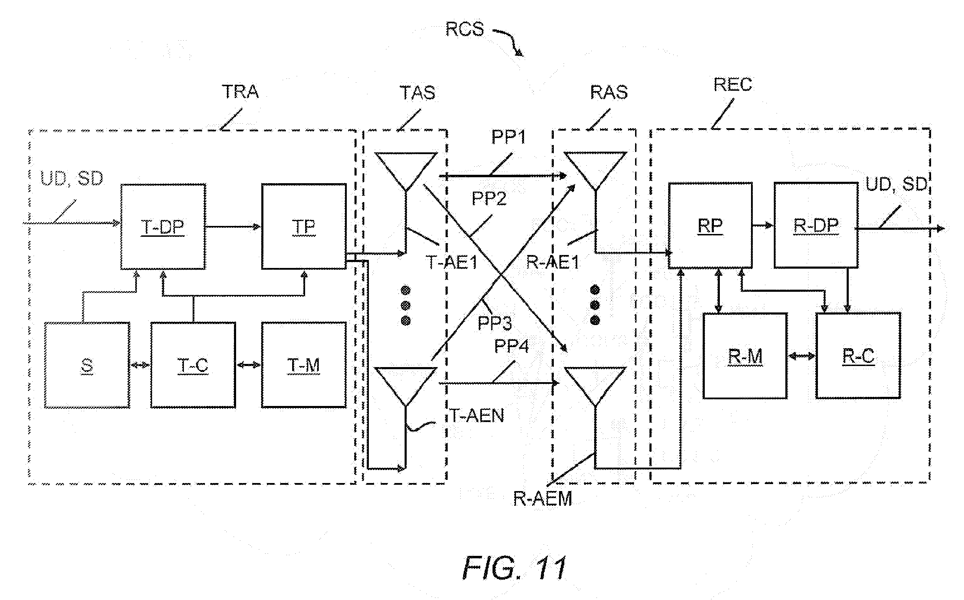

Figure 11 shows a block diagram of the transmitter TRA and the receiver REC of a radio communication system RCS according to the embodiments of the invention.

User and/or signalling data UD, SD are provided to a transmit data processor T-DP of the transmitter TRA. The transmit data processor T-DP may time spreads or may time spreads and encodes the user and/or signalling data UD, SD according to the embodiments of the invention. Parameters such as required for data rate, for coding, for interleaving, and/or for symbol mapping may be provided by a transmit controller T-C and a scheduler S of the transmitter TRA.

A transmit processor TP may receives and processes the time spread or time spread and coded symbols Q1, Q2, Q3, Q4 and pilot data to provide modulated transmission symbols. The transmit processor TP provides for each of antenna elements T-AE1 to T-AEN of a transmit antenna system TAS different streams of transmission symbols, which are transmitted via different propagation paths PP1, PP2, PP3, PP4 to the receiver REC.

A memory T-M of the transmitter TRA may be used for storing a transmitter computer program product. The transmitter computer program product may comprise transmitter steps of one or several of the methods M1 to M3 according to the embodiments of the invention.

Antenna elements R-AE1 to R-AEM of a receive antenna system RAS receive the different streams of transmission symbols as the first and the second received signals or as the first, the second, the third, and the fourth received signals and provide the received signals to a receive processor RP. The receive processor RP demodulates the received signals and provides the demodulated received signals to a receive data processor R-DP. The receive data processor R-DP may despread, decode, and combine the demodulated received signals according to the embodiments of the invention. Parameters such as required for de-spreading and de-coding may be provided by a receive controller R-C.

A memory R-M of the receiver REC may be used for storing the received signals and/or a receiver computer program product. The receiver computer program product may comprise receiver steps of one or several of the methods M1 to M3 according to the embodiments of the invention.

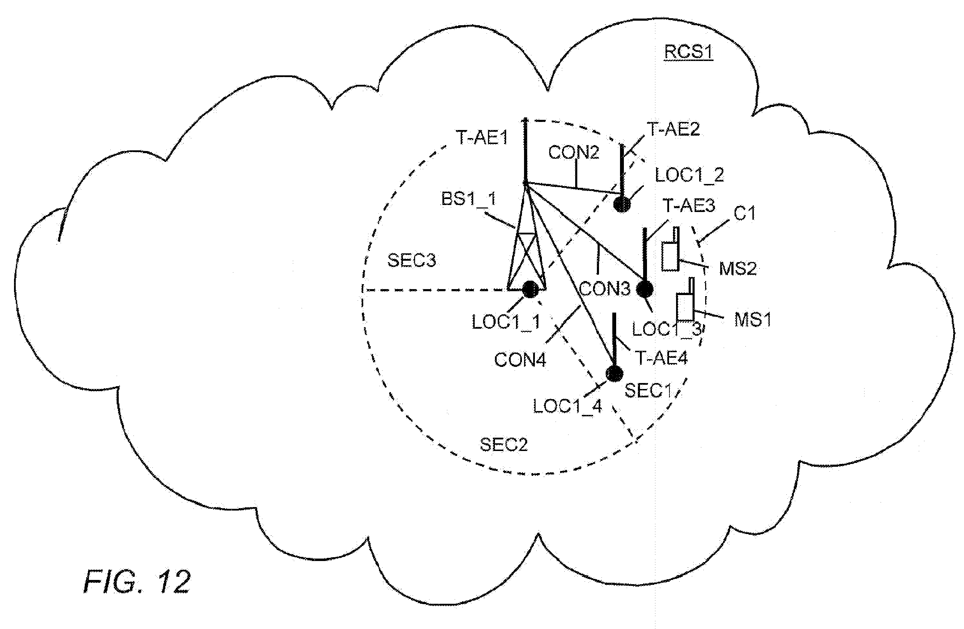

Figure 12 shows a block diagram of a first radio communication system RCS1 according to a first application of the embodiments of the invention. The first radio communication system RCS1 comprises a base station BS1_1. The base station BS1_1 provides a radio cell C1. The first radio communication system RCS1 may comprise further base stations providing further radio cells. The further base stations and further radio cells are not shown for simplification.

The radio cell C1 may comprise a first sector SEC1, a second sector SEC2, and a third sector SEC3. The radio cell C1 may comprise less or more than three sectors.

The base station BS1_1 may comprise a transmit antenna system with the four antenna elements T-AE1, T-AE2, T-AE3, T-AE4, Alternatively, the base station BS1_1 may comprise the transmit antenna system with two antenna elements or more than four antenna elements. The first antenna element T-AE1 may be located at a first location LOC1_1 of the base station BS1_1. The second, third, and fourth antenna element T-AE2, T-AE3, T-AE4 may be distributed across the first sector SEC1 at locations LOC1_2, LOC1_3, LOC1_4. In an alternative, the antenna elements T-AE1, TAE2, T-AE3, T-AE4 may be distributed for example pairwise across the first sector SEC1.

The first antenna element T-AE1 may be directly connected to the base station BS1_1. The second, third, and fourth antenna element T-AE2, T-AE3, T-AE4 may be connected via connections CON2, CON3, CON4 to the base station BS1_1. The connections CON2, CON3, CON4 may be cable based, fibre based, or radio based.

A first mobile station MS1 and a second mobile station MS2 may be located within the first sector SEC1. In further alternatives, only one mobile station or more than two mobile stations may be located within the first sector SEC1.

The first mobile station MS1 and the second mobile station MS2 may comprise receive antenna systems with one or more antenna elements. The base station BS1_1 may perform the downlink radio communication to the first mobile station MS1 and/or the second mobile station MS2 using the methods M1 to M3 according to the embodiments of the invention for example by transmitting the first symbol Q1 to the first mobile station MS1 and/or the second symbol Q2 to the second mobile station MS2.

In a further alternative, the first mobile station MS1 and/or the second mobile station MS2 may perform the uplink radio communication to the base station BS1_1 using the methods M1 to M3 according to the embodiments of the invention.

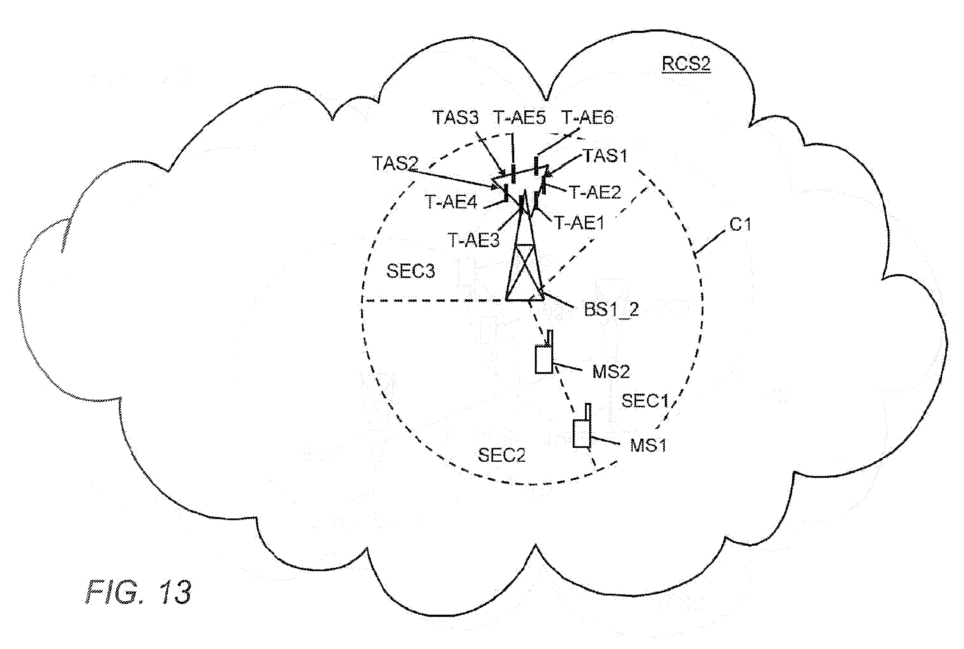

Figure 13 shows a block diagram of a second radio communication system RCS2 according to a second application of the embodiments of the invention.

The second radio communication system RCS2 comprises a base station BS1_2. The base station BS1_2 provides the radio cell C1. The second radio communication system RCS2 may comprise further base stations providing further radio cells. The further base stations and the further radio cells are not shown for simplification.

The base station BS1_2 may comprise a first transmit antenna system TAS1 with two antenna elements T-AE1, T-AE2, a second transmit antenna system TAS2 with two antenna elements T-AE3, T-AE4, and a third transmit antenna system TAS3 with two antenna elements T-AE5, T-AE6.

The first transmit antenna system TAS1 may be used for the first sector SEC1, the second transmit antenna system TAS2 may be used for the second sector SEC2, a nd the third transmit antenna system TAS3 may be used for the third sector SEC3.

The first, the second, and the third transmit antenna system TAS1, TAS2, TAS3 may be located at a location of the base station BS1_2 as shown in Figure 13 or may be located within corresponding sectors SEC1, SEC2, SEC3 by distributing the antenna elements of the first, the second, and the third transmit antenna system TAS1, TAS2, TAS3 across the corresponding sectors SEC1, SEC2, SEC3.

The first mobile station MS1 and the second mobile station MS2 may be located between the first and the second sector SEC1, SEC2. In further alternatives, only one mobile station or more than two mobile stations may be located between the first and the second sector SEC1, SEC2.

The base station BS1_2 may be combine the two antenna elements T-AE1, T-AE2 of the first transmit antenna system TAS1 and the two antenna elements T-AE3, T-AE4 of the second transmit antenna system TAS2 for performing the downlink radio communication to the first mobile station MS1 and/or the second mobile station Ms2 using one of the methods M1 to M3 according to the embodiments of the invention for example by transmitting the first symbol Q1 to the first mobile station MS1 and/or the second symbol Q2 to the second mobile station MS2.

In a further alternative, the first mobile station MS1 and/or the second mobile station MS2 may perform the uplink radio communication to the base station BS1_2 using the methods M1 to M3 according to the embodiments of the invention.

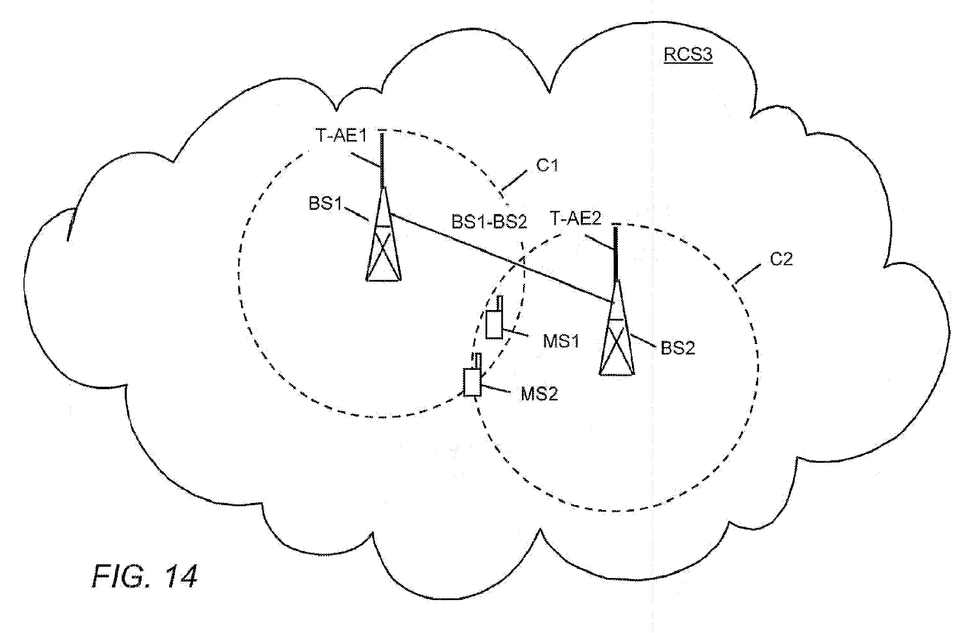

Figure 14 shows a block diagram of a third radio communication system RCS3 according to a third application of the embodiments of the invention, The first radio communication system RCS3 comprises a first base station BS1 and a second base station BS2. The first base station BS1 provides the radio cell C1 and the second base station BS2 provides a second radio cell C2. The first radio communication system RCS3 may comprise further base stations providing further radio cells. The further base stations and the further radio cells are not shown for simplification.

The first base station BS1 may comprise a first transmit antenna system with the first antenna element T-AE1 and the second base station BS2 may comprise a second transmit antenna system with the second antenna element T-AE2. Alternatively, the first base station BS1 and/or the second base station BS2 may comprise transmit antenna systems with more than one antenna element.

The first base station BS1 may be directly connected to the second base station BS2 via a connection BS1-BS2. In an alternative, the first base station BS1 and the second base station BS2 may be connected via a third base station or via another network element such as an RNC (RNC = radio network controller).

The first mobile station MS1 and the second mobile station MS2 may be located between the first and the second radio cell C1 C2, In further alternatives, only one mobile station or more than two mobile stations may be located between the first and the second radio cell C1, C2.

The first base station BS1 may be a master base station and the second base station BS2 may be a slave base station. The first base station BS1 may combine the two antenna elements T-AE1, T-AE2 of the first base station BS1 and the second base station BS2 for performing the downlink radio communication to the first mobile station MS1 using one of the methods M1 to M3 according to the embodiments of the invention for example by transmitting the first symbol Q1 to the first mobile station MS1 and/or the second symbol Q2 to the second mobile station MS2. In an alternative, the first mobile station MS1 and/or the second mobile station MS2 may perform the uplink radio communication to the first base station BS1 and the second base station BS2 using the methods M1 to M3 according to the embodiments of the invention.

In a further alternative, a superordinate network node such as an RNC may combine the two antenna elements T-AE1, T-AE2 of the first base station BS1 and the second base station BS2 for performing the downlink radio communication to the first mobile station MS1 and/or the second mobile station MS2 using one of the methods M1 to M3 according to the embodiments of the invention.

Such a collaborative transmission scheme of the first and the second base station BS1, BS2 enables coverage improvements at a border of the radio cells C1, C2.

## Claims

1. A method for data transmission in a radio communication system (RCS, RCS1, RCS2, RCS3), said method comprising the steps of.
- time spreading (M1/1) at least one symbol (Q1, Q2, Q3, Q4) over a first sequence of symbols (SS1_1, SS2_1) comprising at least two symbol times (ST1_1, ST1_2, ST1_3, ST1_4) at a transmitter (TRA), and
- transmitting (M1/2) said time spread at least one symbol (Q1, Q2, Q3, Q4) from said transmitter (TRA) to a receiver (REC),
**characterized in that** said method further comprises the steps of:
- re-transmitttng (M1/5) from said transmitter (TRA) to said receiver (REC) said at least one symbol (Q1 Q2, Q3, Q4) being time spread over at least one second sequence of symbols (SS1_2, SS2_2, SS2_3, SS2_4) comprising at least two further symbol times (ST2_1, ST2_2, ST2_3, ST2_4), and
- combining (M1/8) first received signals of said first sequence of symbols (SS1_1, SS2_1) and at least second received signals of said at least one second sequence of symbols (SS1_2, SS2_2, SS2_3, SS2_4) at said receiver (REC).

2. Method according to claim 1, wherein a number of said at least two symbol times (ST1_1, ST1_2, ST1_3, ST1_4) and of said at least two further symbol times (ST2_1, ST2_2, ST2_3, ST2_4) is equal to a number of said of least two antenna elements (T-AE1, T-AE2, T-AE3, T-AE4) at said transmitter (TRA).

3. Method according to claim 2, wherein said number of said at least two antenna elements (T-AE1, T-AE2, T-AE3, T-AE4) is one of the powers of 2.

4. Method according to claim 1, wherein said transmitting (M1/2) being performed over a first one or at least two antenna elements (T-AE1, T-AE2, T-AE3, T-AE4) and said re-transmitting (M1/5) being performed over a second one of said at least two antenna elements (T-AE1, T-AE2, T-AE3, T-AE4).

5. Method according to claim 1, wherein said transmitting (M1/2) for a first one (ST1_1) of said at least two symbol times (ST1_1, ST1_2, ST1_3, ST1_4) and said re-transmitting for at least one further first one (ST2_1) of said at least two further symbol times (ST2_1, ST2_2, ST2_3, ST2_4) being performed over a first one of at least two antenna elements (T-AE1, T-AE2, T-AE3, T-AE4) and wherein said transmitting (M1/2) for at least one second one (ST1_2) of said at least two symbol times (ST1_1, ST1_2, ST1_3, ST1_4) and said re-transmitting (M1/5) for at least one further second one (ST2_2) of said at least two further symbol times (ST2_1, ST2_2, ST2_3, ST2_4) being performed over a second one of said at least two antenna elements (T-AE1, T-AE2, T-AE3, T-AE4).

6. Method according to claim 4 or claim 5, wherein said at least one symbol (Q1 Q2, Q3, Q4) being re-transmitted successively over all of said at least two antenna elements (T-AE1, T-AE2, T-AE3, T-AE4).

7. Method according to claim 1, wherein said time spreading (M1/1) of said at least one symbol (Q1, Q2, Q3, Q4) being done with a first one of at least two orthogonal codes (C1_1, C1_2, C2_1, C2_2, C2_3, C2_4).

8. Method according to claim 7, wherein said at least two orthogonal codes (C1_1, C1_2, C2_1, C2_2, C2_3, C2_4) being based on Walsh functions or orthogonal variable spreading factor codes.

9. Method according to claim 7, wherein said time spreading (M1/1) over said first sequence of symbols (SS1_1, SS2_1) being done for at least one further symbol (Q1, Q2, Q3, Q4) with at least a further first one of said of least two orthogonal codes (C1_1, C1_2, C2_1, C2_2, C2_3, C2_4), said transmitting (M1/2) being done for said at least one further symbol (Q1, Q2, Q3, Q4), and said re-transmitting (M1/5) being done for said at least one further symbol (Q1, Q2₋, Q3, Q4).

10. Method according to claim 9, wherein said time spread at least one symbol (Q1, Q2, Q3, Q4) and said time spread at least one further symbol (Q1, Q2, Q3, Q4) being transmitted and re-transmitted over different of said at least two antenna elements (T-AE1, T-AE2, T-AE3, T-AE4).

11. Method according to claim 9, wherein said first one of said at least two orthogonal codes (C1_1, C1_2, C2_1, C2_2, C2_3, C2_4) being allocated to said first one of said at least two antenna elements (T-AE1, T-AE2, T-AE3, T-AE4) and said at least further first one of said of least two orthogonal codes (C1_1, C1_2, C2_1_{,} C2_2, C2_3 C2_4) being allocated to said at least further first one of said at least two antenna elements (T-AE1, T-AE2, T-AE3, T-AE4) for said first and sold at least one second sequence of symbols (SS1_1, SS1_2, SS2_1, SS2_2, SS2_3, SS2_4).

12. Method according to claim 9, wherein said first one of said at least two orthogonal codes (C1_1, C1_2, C2_1, C2_2, C2_3, C2_4) being allocated to said at least one symbol (Q1, Q2, Q3, Q4) and said at least further first one of said at least two orthogonal codes (C1_1, C1_2, C2_1, C2_2, C2_3 C2_) being allocated to said at least one further symbol (Q1, Q2, Q3, Q4) for said first and said at least one second sequence of symbols (SS1_1, SS1_2, SS2_1, SS2_2, SS2_3, SS2_4).

13. Method according to claim 1, said method further comprising the steps of:
- storing (M1/4) said first received signals at said receiver (REC),
- calculating (M3/1) at least one first correction factor for said first received signals at said receiver (REC),
- storing (M1/7) said at least said second received signals at said receiver (REC), and
- calculating (M3/2) at least one second correction factor for said at least second received signals at said receiver (REC),
and wherein said combining is a weighted summation of said first received signals and said at least second received signals using said at least one first and said at least one second correction factor.

14. A transmitter (TRA), said transmitter (TRA) comprises:
- means (T-DP) for time spreading at least one symbol (Q1, Q2, Q3, Q4) over a first sequence of symbols (SS1_1, SS2_1) comprising at least two symbol times (ST1_1, ST1_2, ST1_3, ST1_4), and
- means (TP) for transmitting said time spread at least one symbol (Q1, Q2, Q3, Q4),
**characterized in that** said transmitter (TRA) further comprises means (TP) for re-transmitting said at least one symbol (Q1, Q2, Q3, Q4) being time spread over at least one second sequence of symbols (SS1_2, SS2_2, SS2_3, SS2_4) at least two further symbol times (ST2_1, ST2_2, ST2_3, ST2_4).

15. A receiver (REC), said receiver (REC) comprises:
means (RAS, RP) for receiving at least one symbol (Q1, Q2, Q3, Q4) being time spread over a first sequence of symbols (SS1_1, SS2_1) comprising at least two symbol times (ST1_1, ST1_2, ST1_3, ST1_4), and
- means (RAS, RP) for receiving said at least one symbol (Q1, Q2, Q3, Q4) being time spread over at least one second sequence of symbol (SS1_2, SS2_2, SS2_3, SS2_4) comprising of least two further symbol times (ST2_1, ST2_2, ST2_3, ST2_4),
**characterized in that** said receiver (REC) further comprises means (R-DP) for combining first received signals of said first sequence of symbols (SS1_1, SS2_1) and at least second received signals of said at least one second sequence of symbols (SS1_2, SS2_2, SS2_3, SS2_4).
